# EUROPEAN PATENT APPLICATION

(11) **EP 1 835 397 A1**
(43) Date of publication of application: **19.09.2007**
(21) Application number: 06003964.1
(22) Date of filing: 27.02.2006
(51) Int. Cl.: G06F 9/44

(54) **Application framework**

(71) Applicant: SOFTWARE AG, 64297 Darmstadt (DE)
(72) Inventor: Winkler, Kay, 64287 Darmstadt (DE); Hafermann, Udo Dr., 64291 Darmstadt (DE); Harbarth, Jürgen, 64285 Darmstadt (DE); Zimmermann, Christine, 64285 Darmstadt (DE); Mueller, Björn, 69245 Bammental (DE)
(74) Representative: Wegner, Hans

(57) **Abstract**

The invention concerns an application framework for composing applications involving a plurality of webservices (30). The application framework comprises
- a layout editor adapted to create a graphical user interface of an application comprising a plurality of pages (10), each page (10) comprising at least one element (11) for interaction with a user to generate or modify a set of data (41);
- a control layer editor, adapted to create for each page (10) of the graphical user interface a corresponding code fragment (50) receiving and processing the set of data relating to the respective page (10); and
- a generator (100) generating an orchestration sequence (80) from the plurality of code fragments (50), wherein the processing of the orchestration sequence (80) by an engine (110) involves the invoking of the plurality of webservices (30).

## Description

### 1. Technical field

The present invention relates to an application framework for composing applications involving a plurality of webservices.

### 2. The prior art

Webservices are nowadays standardized interfaces for exchanging data over the internet. An application of a client may request data from a server over the internet using a webservice provided by a server. More technically advanced applications typically combine various webservices to obtain or process the desired data, for example to provide and to modify information concerning a business operation. An application developer must provide both, a user interface and the application logic, so that a user can interact with the application and that the application performs the desired processing of the data based on the various webservices involved.

However, the application logic and also the user interface of such a composite application often need to be quickly changed, for example if changing business operations are to be reflected by the application. Low-level programming of the changed application logic and / or a changed user interface in a typical programming language such as JAVA is time consuming and difficult. Therefore, there are approaches in the prior art, how applications using webservices can be more efficiently created or modified.

One approach is the Business Process Execution Language (BPEL) as it is for example described in the publication on p. 34 of the 6. edition 2006 of the magazine "Computerwoche". BPEL allows to flexibly provide or change application logic which processes data involving a plurality of webservices.

However, applicant has found that the task of quickly creating or adapting an application involving webservices requires more than quickly adapting the application logic alone. The user interface, i.e. the possibilities of data input or output also needs to be quickly modified. In the prior art it is generally known, how to quickly generate or change graphical used interfaces, for examples by graphically selecting and positioning user control elements such as check boxes or lists etc.. In application frameworks according to the prior art, the data generated by the user interface at first needs to be processed by some intermediate code in order to bring it into a format, which is suitable to interact with BPEL. Changing the user interface and / or the application logic therefore still needs low-level programming in order to assure that an application logic modified using BPEL and the user interface can still work together.

It is therefore the technical problem to provide an application framework, which allows to flexibly generate and / or to modify applications involving webservices with a reduced amount of low-level programming, to reduce development time and the involved risk of programming errors.

### 3. Summary of the invention

This problem is solved by an application framework for composing applications involving a plurality of webservices. The application framework comprises
- a layout editor adapted to create a graphical user interface of an application comprising a plurality of pages, each page comprising at least one element for interaction with a user to generate or modify a set of data,
- a control layer editor, adapted to create for each page of the graphical user interface a corresponding code fragment receiving and processing the set of data relating to the respective page and
- a generator generating an orchestration sequence from the plurality of code fragments, wherein the processing of the orchestration sequence by an engine involves the invoking of the plurality of webservices.

The close relationship between the graphical user interface created in the layout editor and the processing logic created by the control editor of the invention allows the generation or modification of an application without programming in low-level languages such as Java, C#, etc. for processing the data received by the user interface. In particular, the feature of providing for each page of the graphical user interface a corresponding code fragment significantly facilitates the tasks of a developer, when adapting the user interface and / or the application logic of an existing application to changing requirements.

The generator is responsible for generating a single orchestration sequence out of the various code fragments. The sequence can then at runtime be processed by an engine, which for example directly interprets the sequence or transforms it into an executable format such as a JAVA class.

In a preferred embodiment, the application framework is further adapted to create each code fragment such that it receives the set of data via a webservice interface, wherein the definition for this interface comprises preferably an XML schema definition (XSD) of the set of data and at least one function called by the respective page, in particular a web service definition (WSDL). Particularly preferred is an embodiment, wherein the application framework is further adapted to automatically derive the XSD and at least one WSDL for each page created in the layout editor. As a result, the interface definition is effectively driven by the page, which is defined independently from the application logic and defines only its interface of data and functions it requires to talk to the application logic.

In one embodiment of the invention, the control layer editor is adapted to create the code fragments as fragments implemented in Business Process Execution Language (BPEL) and wherein the orchestration sequence is a BPEL sequence, which can be processed by a BPEL engine. BPEL is standardized, platform independent and specifically designed to orchestrate Web services. Another advantage is that is can process XML documents as variables. Furthermore, it is compared to the above mentioned low-level, pointer based programming languages easy to use and can at least for simple scenarios be visualized as a flow chart diagram. However, whereas BPEL is presently preferred for implementing the code fragments of the invention, other languages could be used as well such as a .NET implementation, a NATURAL implementation etc..

According to a further aspect of the present invention, each code fragment comprises preferably a plurality of method fragments, wherein each method fragment corresponds to a function call generated on the respective page of the graphical user interface. This is a further preferred feature, which additionally facilitates to develop structured code fragments for the application logic corresponding to each page of the user interface.

Finally, the processing of the orchestration sequence of an application composed by the application framework comprises preferably holding the state of an object and processing the state based on the operations defined in one or more code fragments. The processing of the state comprises preferably transforming the object into a format suitable for a webservice, executing the webservice and transforming the response of the webservice back into an initial format of the object. In one embodiment of the invention the object comprises XML data conforming to an XSD and the transforming is performed using XSLT encapsulated as a webservice. The encapsulation as a webservice is particularly preferred, if BPEL fragments are used as code fragments, since BPEL itself does presently not provide a concept of nesting one sequence inside another.

Further improvements of the described application framework are the subject matter of further dependent claims.

In addition, the present invention concerns a method using the above explained application framework, an application composed by the above described application framework and a data carrier comprising the above described application framework.

### 4. Short description of the drawings

In the following detailed description presently preferred embodiments of the invention are further described with reference to the following figures:
- Fig. 1:: A schematic representation of the various pages of a graphical user interface;
- Fig. 2:: A schematic representation of a single page comprising a plurality of control elements for interaction with a user;
- Fig. 3:: A schematic representation of the general relation between a graphical user interface, the application logic and the involved webservices;
- Fig. 4:: A schematic representation of the set of data and functions automatically derived from a layout definition of a page in a preferred embodiment of the invention;
- Fig. 5:: An example of an actual page of the graphical user interface of the invention;
- Fig. 6:: A schematic representation of the preferred 1 : relation between pages of the graphical user interface and the BPEL code fragments;
- Fig. 7:: A schematic representation of the generator generating a BPEL program from a plurality of BPEL fragments.
- Fig. 8:: A schematic representation of the internal and external structure of a BPEL fragment in a preferred embodiment of the invention; and
- Fig. 9:: A schematic representation of the internal and external structure of a BPEL fragment in another preferred embodiment of the invention;

### 5. Detailed description of preferred embodiments

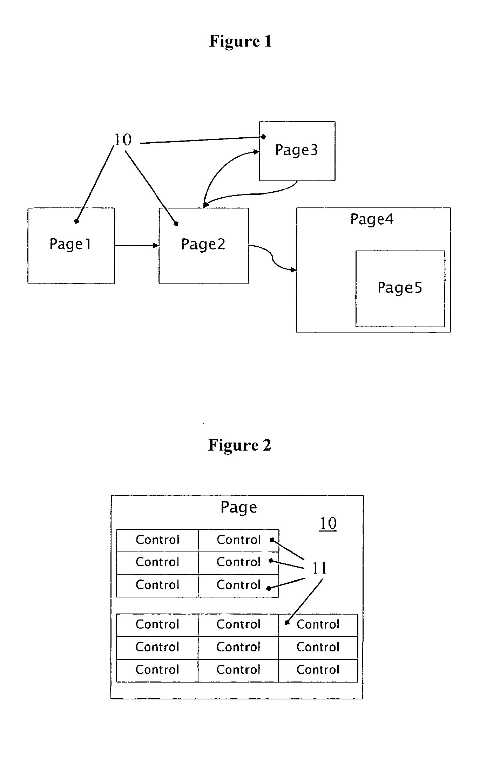

In the following, the mapping of a user interface to webservice processing, as it is perfonned by an embodiment of the application framework of the present invention, will be explained in a first section. The preferred implementation of the webservice processing itself using BPEL fragments is discussed in a further section below.
A graphical user interface of an application composed with an embodiment of the application framework of the invention is separated into pages 10, as they are exemplary shown in Fig. 1. Each page 10 is representing a certain amount of data and functions that are presented to the user at runtime. Between pages 10 there is a page navigation which typically includes:
- Following a sequence of pages (cf. the arrows in Fig. 1)
- Opening pages as modal/modeless popup
- Nesting of pages (cf. page 5 nested in page 4 of Fig. 1)

The page 10 is typically representing some dedicated, self containing application task that needs to be operated by the user. The definition of this application task is up to the page's designer / developer. The page 10 is internally structured into controls 11. Controls 11 are representing preferably reusable components that represent a certain piece of data (e.g. input field) and / or a certain behavior (e.g. button).

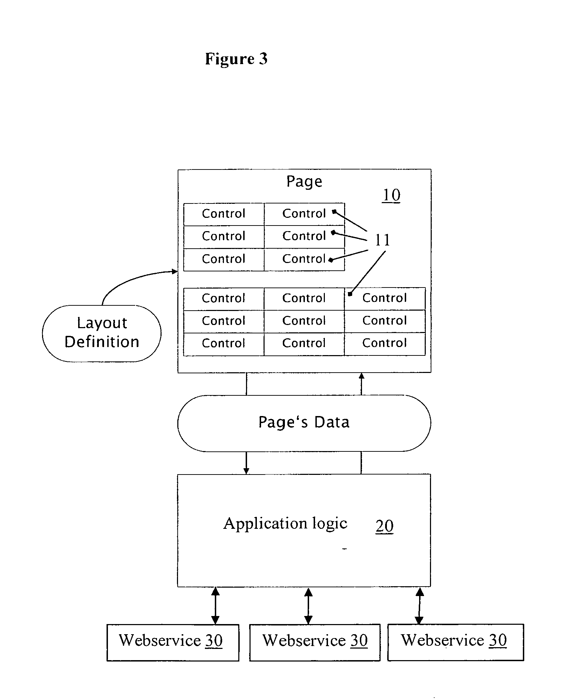

The coupling of a page's processing to its corresponding application logic operates generally as follows (cf. Fig. 3):
- The page 10 is representing a certain amount of data and functions. The page's task is to visualize this data using controls 11 and to communicate changes to this data (e.g. user input into field) or function calls (e.g. a user presses a button) to the application logic 20 of the application.
- The layout of the page 10 is defined by a layout definition in the layout editor. The layout definition holds the information which control 11 is used inside the page 10.
- Inside the layout definition each control 11 is specified with its optical attributes (e.g. colour, position) and with its binding attributes. The binding attributes define which part of the page's data is required / accessed by the corresponding control 11 and / or which function is called by the corresponding control.

Fig. 3 schematically reflects the standard processing of inputs of a user of an application involving webservices 30. A page 10 requests at runtime its data from the application logic 20 and presents this data to the user. The user manipulates the data, for example by doing inputs (not shown). At certain synchronization-relevant points of time (e.g. pressing a button) the updated page's data is sent back to the application logic 20 together with the information of which function to process. The application logic 20 receives the manipulated page data, processes it (e.g. does some calculation involving one or more webservices 30) and sends the updated data back to the page 10. The page 10 receives this updated data, updates its controls 11 so that the data that is visualized is adjusted.

In application frameworks of the prior art, the communication between the pages 10 of the graphical user interface and the application logic 20 is typically provided by a separate intermediate layer (not shown in Fig. 3) arranged between the user interface and the application logic. Using low-level programming, the input of a user at the user interface is read out by the intermediate layer and forwarded to the application logic. Whenever at least one end of this communication changes, i.e. any of the controls 11 of the pages 10 of the user interface and / or the application logic 20, the low-level programming of the intermediate layer needs to be repeated. This is time consuming and may cause errors in the overall data processing.

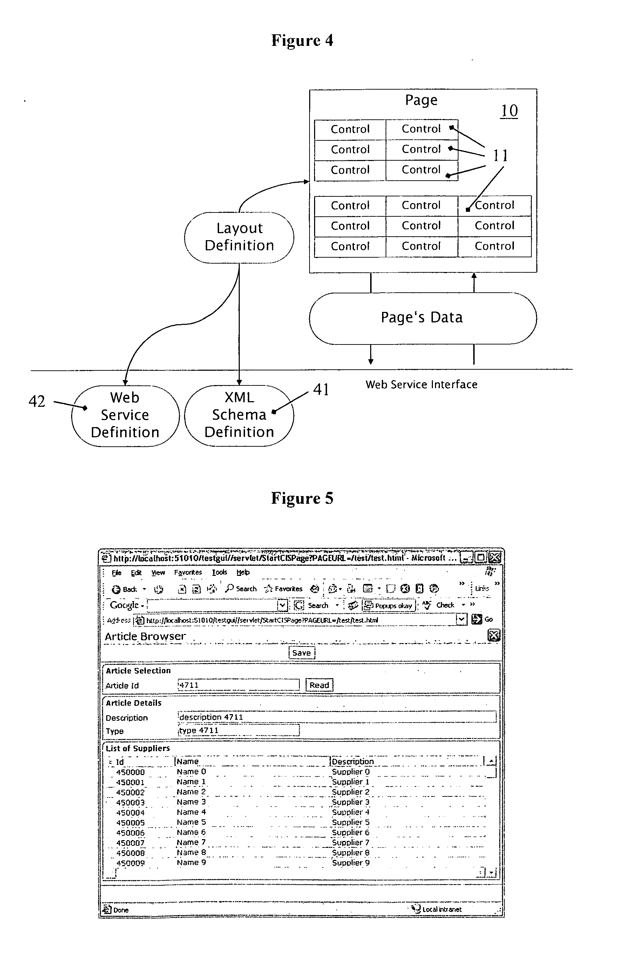

In order to overcome these disadvantages, the described embodiment of the present invention technically and semantically decouples the page processing from the application logic 20. Accordingly, an embodiment of the present invention provides a program interface definition between a page 10 and the application logic 20 (cf. Fig. 4). This interface definition contains:
- The schema definition of the data of the page 10 that is exchanged every time the page synchronizes its data with the corresponding application logic (not shown in Fig. 4).
- The list of functions that is called by the page 10 - associated with a data synchronization.

In a preferred embodiment, webservice interfaces are used as a concrete implementation. As a consequence for each page, the following definitions are automatically derived from the page's layout (cf. Fig. 4):
- The XML schema 41 of the page's data. This XML schema presents a "net data structure" of the respective page 10.
- The webservice definition 42 of the webservice that is expected to be made available by the application logic 20.

It is important to point out that the program interface definition is driven by the page 10. In the described embodiment of the invention a page is defined substantially independently from the application logic 20 and defines only its interface of data and functions that are requires to communicate with the application logic 20.

### Example:

The following page is defined as the page shown in Fig. 5 to view some article data. The page layout (using "Application Designer") is defined as:

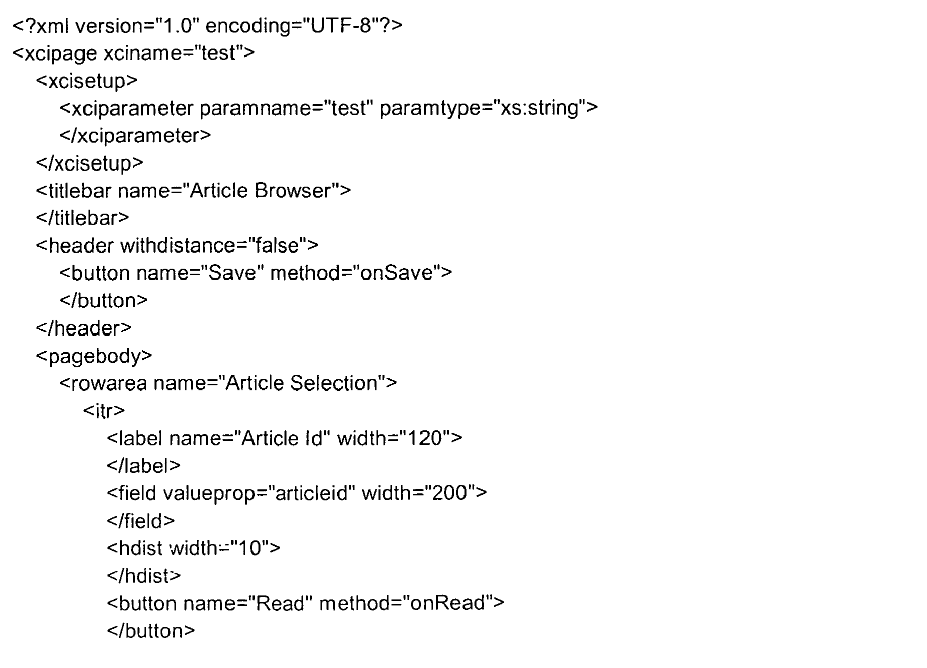

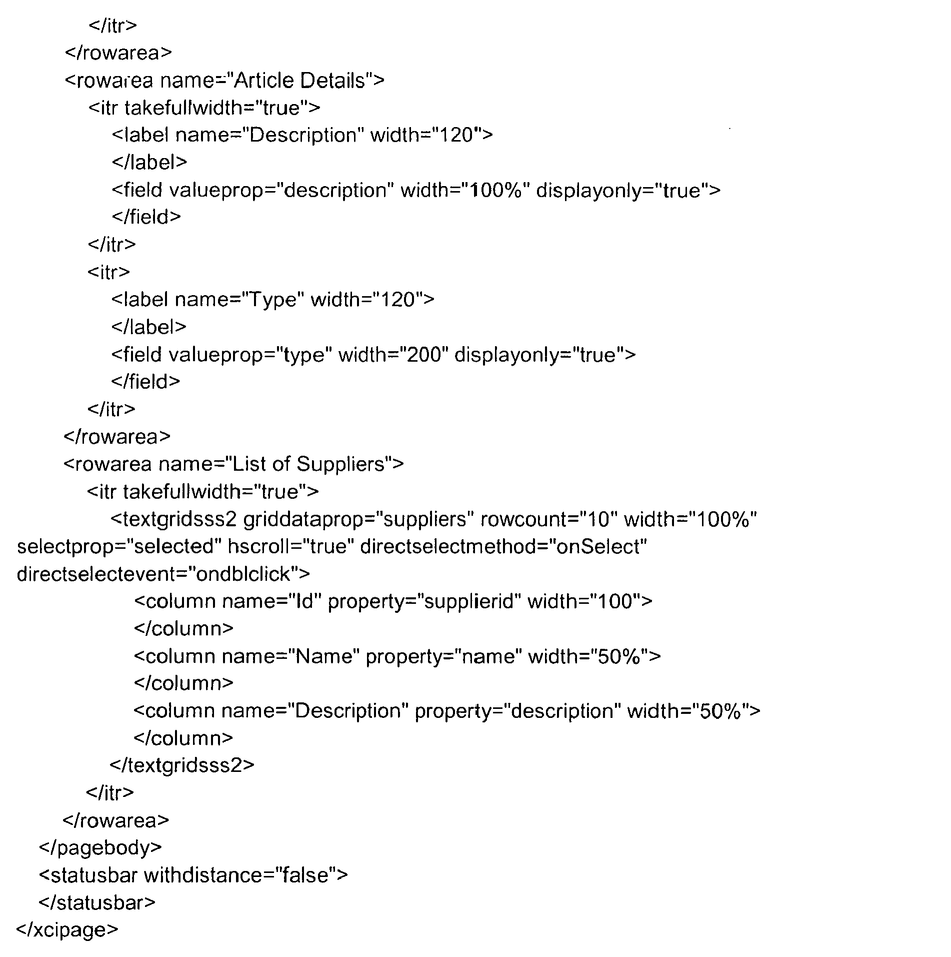

Inside the page layout certain controls define their binding to some data:

### Example 1:

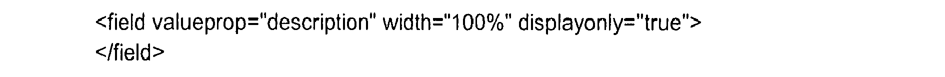

The field expects a data element "description" to be available.

### Example 2:

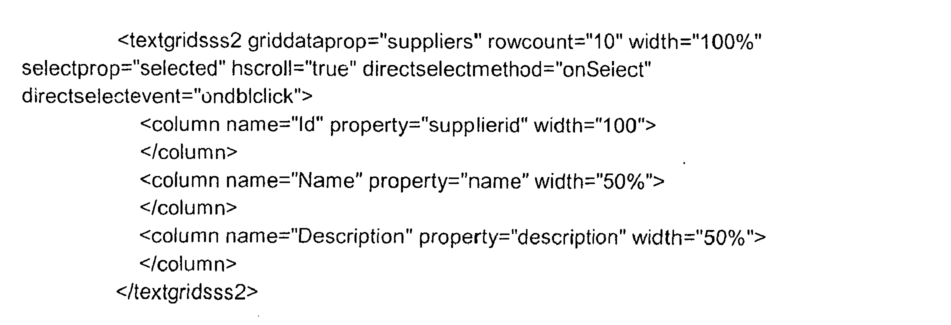

The grid expects a list of suppliers to be available. For each supplier the "supplierid", "name" and "description" is expected to be available. Out of the page the following XML schema definition is created:

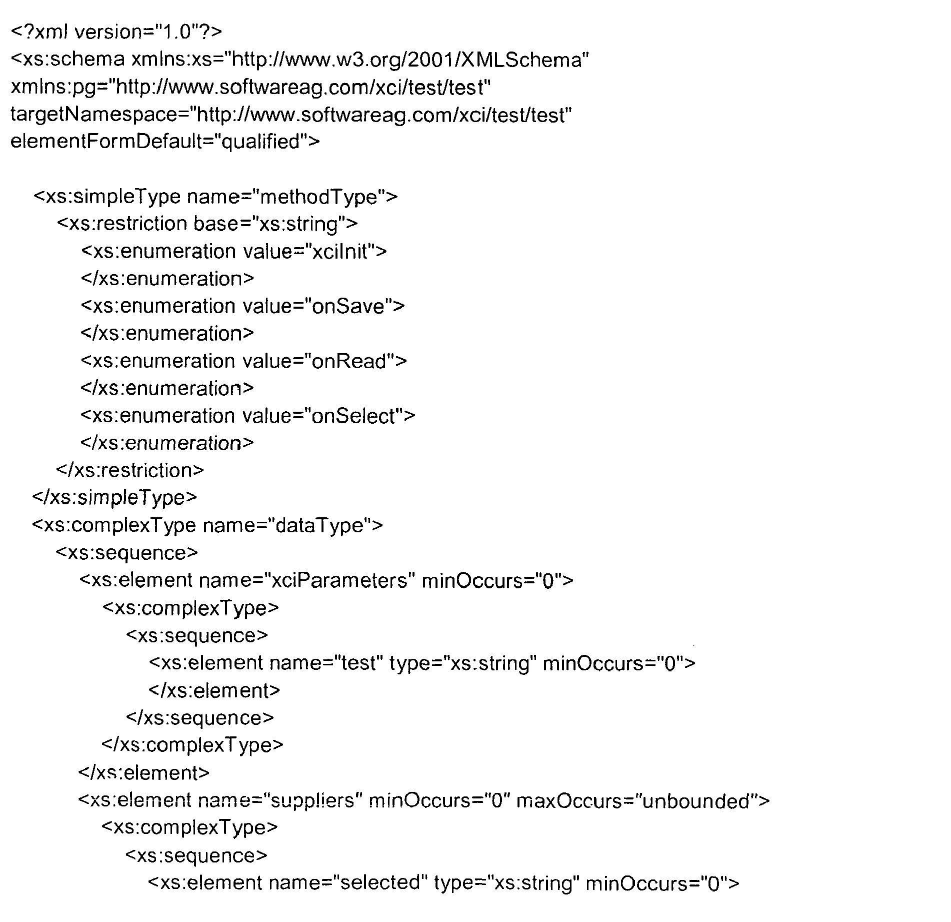

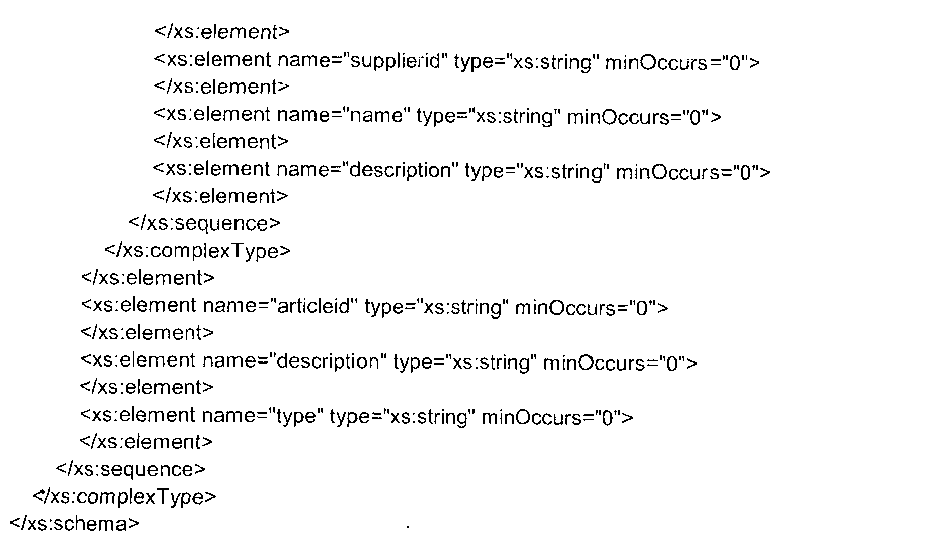

Part of the schema definition is the data that is required by the controls 11 and the list of functions that is called from the controls. The web service definition is:

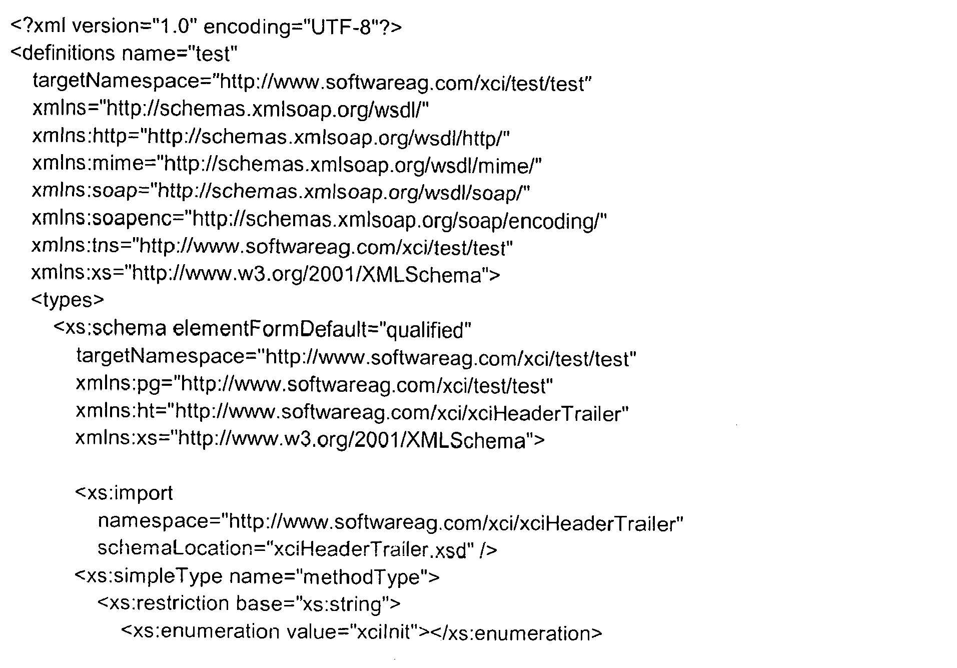

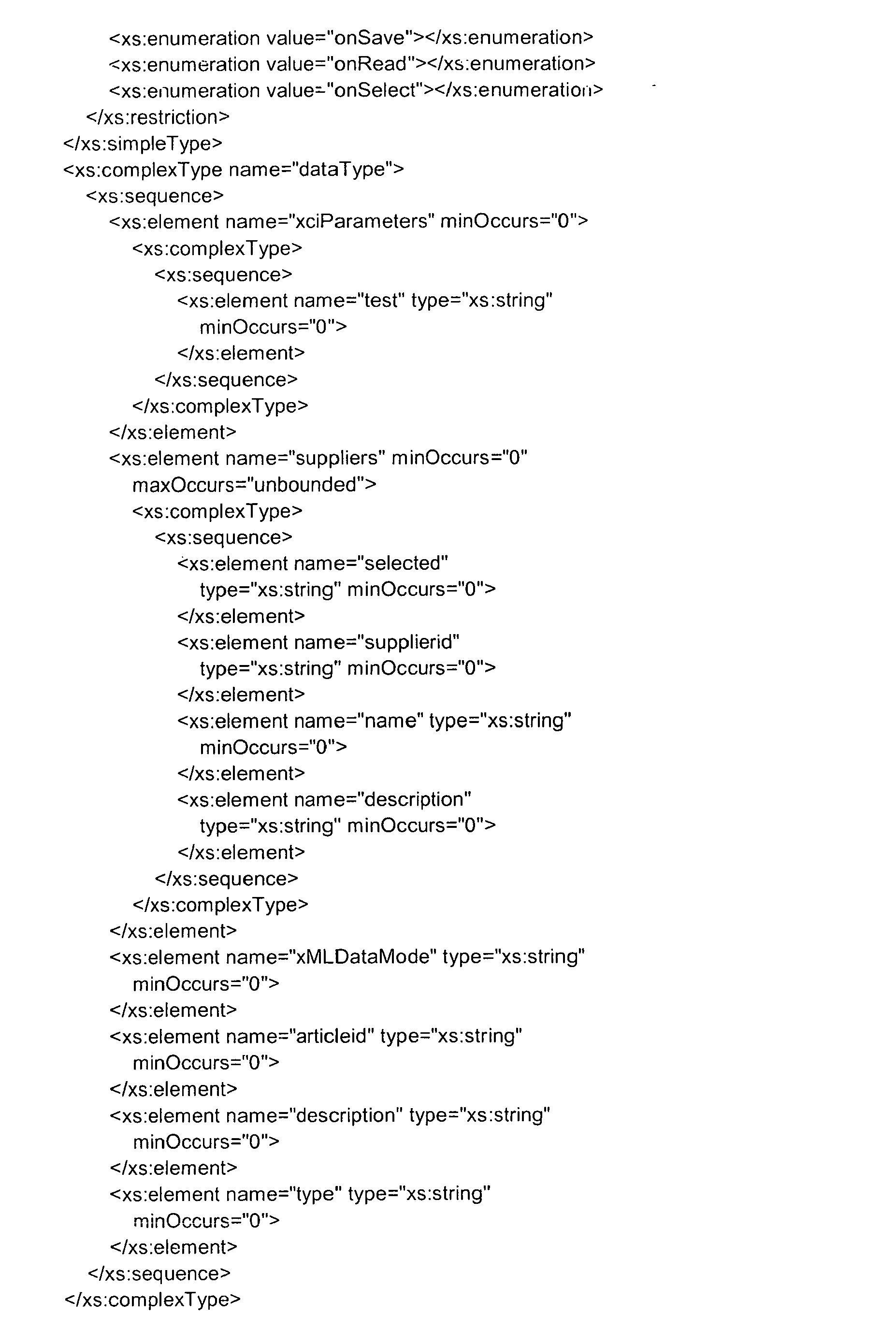

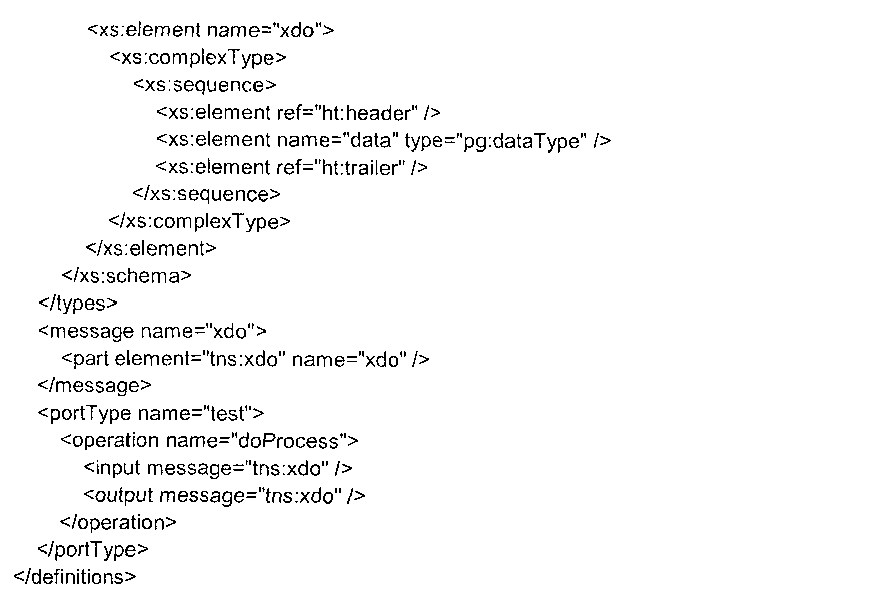

This exemplary webservice contains one operation "doProcess" which is expected to be implemented by the application logic 20. The in/out parameter of this operation is the XML document representing the page's data and the function that is invoked by the page processing.

In the following, the implementation of the application logic 20 using BPEL in a preferred embodiment of the invention is described in more detail.

As can be seen above, the application user interface created by the layout editor is separated into pages 10, wherein each page 10 covers a certain amount of data and functions that are represented to the user. Further, there is a navigation between different pages 10 (e.g. to put them into a certain sequence), as mentioned above. Each page 10 is related to a webservice that is associated with the page's data and functions and which needs to be provided by the application logic 20.

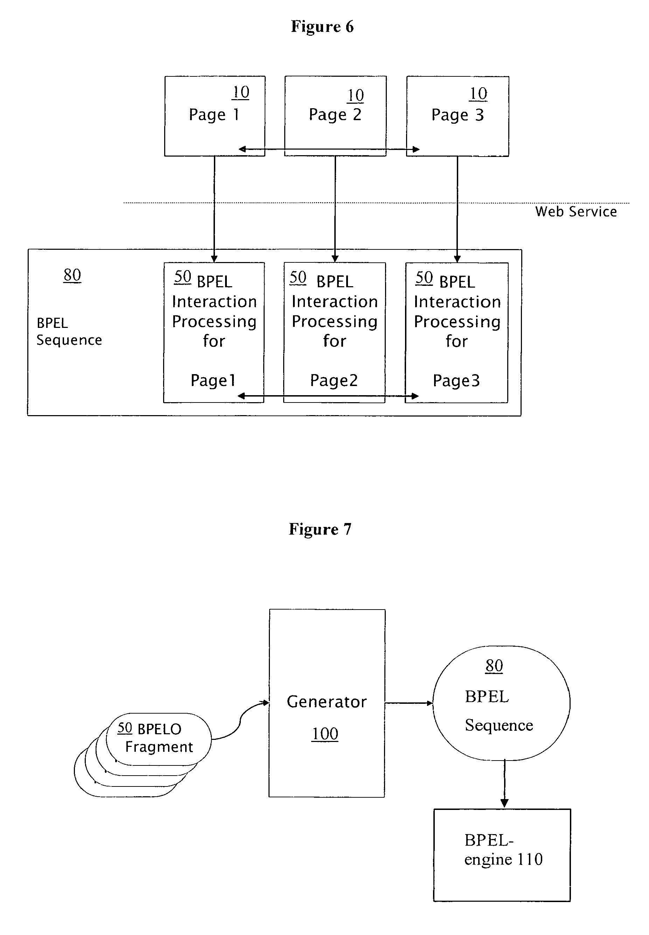

The presently preferred embodiment of the invention uses BPEL as a general purpose programming language for implementing the application logic 20. Using BPEL can be drastically simplified by applying the following principles in accordance with a preferred embodiment of the invention (cf. Fig. 6):
- Each page 10 is represented by a so called BPEL fragment 50, wherein the fragment is taking care of processing the data and the functions of the respective page 10.
- BPEL Fragments 50 are preferably isolated from one another so that its corresponding data is not visible to other BPEL fragments.
- It is possible to share an explicitly defined application context which is defined as a cross-segment.

A generator 100 (cf. Fig. 7) of the application framework in accordance with an embodiment of the invention is responsible for generating a single comprehensive BPEL sequence 80 out of the plurality of BPEL fragments 50. Each BPEL fragment 50 contains the BPEL code for the fragment and the webservice definition that is implemented by the fragment. The finally generated BPEL sequence 80 serves as a program, which can at runtime be deployed to any BPEL engine 110 that conforms to the BPEL specifications.

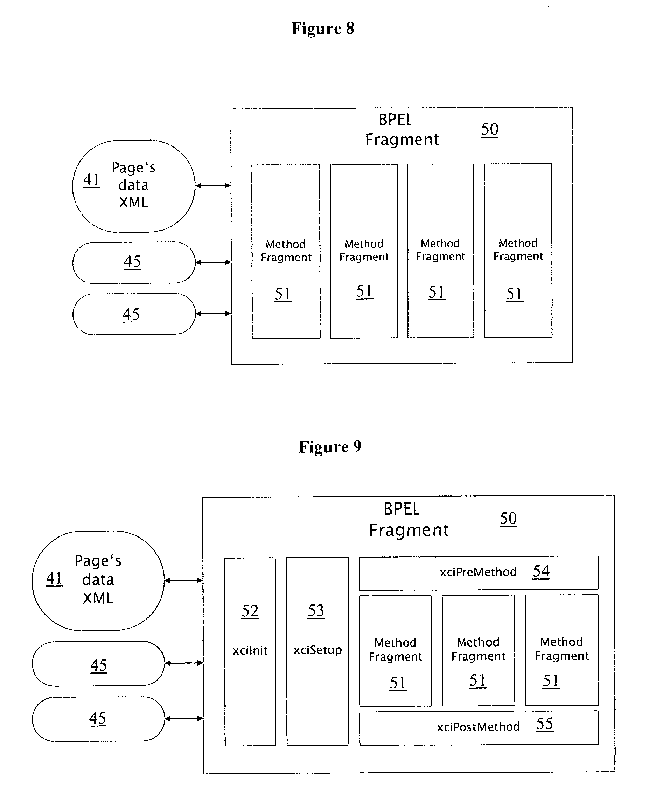

Inside one BPEL fragment 50 (representing the application logic for one page 10) the following structure is preferably applied (cf. Fig. 8):
- The XML representation 41 of the page's data content is made available by a predefined BPEL variable, which is called "xciState" in one embodiment.
- It is possible to define one or more additional fragment-specific variables 45 that are not directly related to the page's data and which influence the application logic provided by the BPEL fragment 50.
- Each reaction on a user interface call is reflected by the definition of a method fragment 51 - containing the BPEL code that is responsible for processing this specific call. Any kind of BPEL code can be applied within such a method fragment.
- Inside the BPEL, code of the method calls 51, the page's data can be accessed and manipulated.

A request that is sent from a page is automatically processed in the following way:
- (1) The request is received by the overall BPEL sequence 80.
- (2) The right BPEL fragment 50 is selected for processing.
- (3) The variable "xciState" is filled with the page's data that comes with the request.
- (4) The right method fragment 51 is selected for processing.
- (5) The method is executed, which may involve one or more webservices 30. The page's data may be updated.
- (6) The updated page's data is sent back within the response.

Only step (5) is visible to the BPEL developer - all other steps are generated automatically by the generator.

In addition, a set of default method fragments is available for each BPEL fragment 50 (cf. Fig. 9):
- xcilnit 52: This method fragment is called when the BPEL fragment 50 is used for the first time at runtime. Any kind of fragment specific initialization can be executed.
- xciSetup 53: This method fragment is called when the page 10 is called as result of page navigation. As part of the navigation the corresponding BPEL fragment received information what data to load for the corresponding page 10.
- xciPrcMethod 54 / xciPostMethod 55: These methods are called before / after calling any other method fragment 50.

As mentioned in the introductory part, BPEL is designed to orchestrate web services, such as the webservices 30 shown in Fig. 3. As a result, if a certain user interface consists of several pages 10, the resulting BPEL sequence 80 obtained from the various BPEL fragments 50 will be quite long. The present invention therefore provides in one embodiment an application framework which makes BPEL effectively usable. One aspect thereof is to make BPEL "Stateful / Object aware":

A state reflects a status of a set of data such as the net data object of the XML data 41 shown in Figs. 4, 8 and 9. Such a state is kept for a certain duration. For example, the net data of a screen is kept for the duration the screen is processed (or maybe longer).

Diverse operations are available to update this state. For example, data is input into a screen or a certain operation is triggered to run in BPEL manipulating the net data object possibly including one of the webservices 30 (cf. Fig. 3). The state is the central part that is referred to by all operations. Therefore, the diverse functions that are triggered by the user interface call may concern different parts of the overall BPEL sequence 80. However, they always lead to the following processing steps:
(a) receiving of a net data object,
(b) operating on the net data object,
(c) responding the net data object

For example, a call to any of the webservices 30 inside the BPEL sequence 80 for a certain screen is done in the following sequence:
(a) take data from net data object and transform this data into a structure that is adequate to the webservice 30,
(b) call the webservice 30,
(c) transform the response of the webservice 30 back into the net data object.

The transformation is done using XSLT. Because XSLT is not supported as native BPEL statement it has to be encapsulated by a corresponding web service. A tool can generate all these parts to form a valid BPEL sequence 80.

### Example:

The following BPEL fragments represent the processing of two pages:
First page "address", holding the methods "xciInit" and "onCheck":

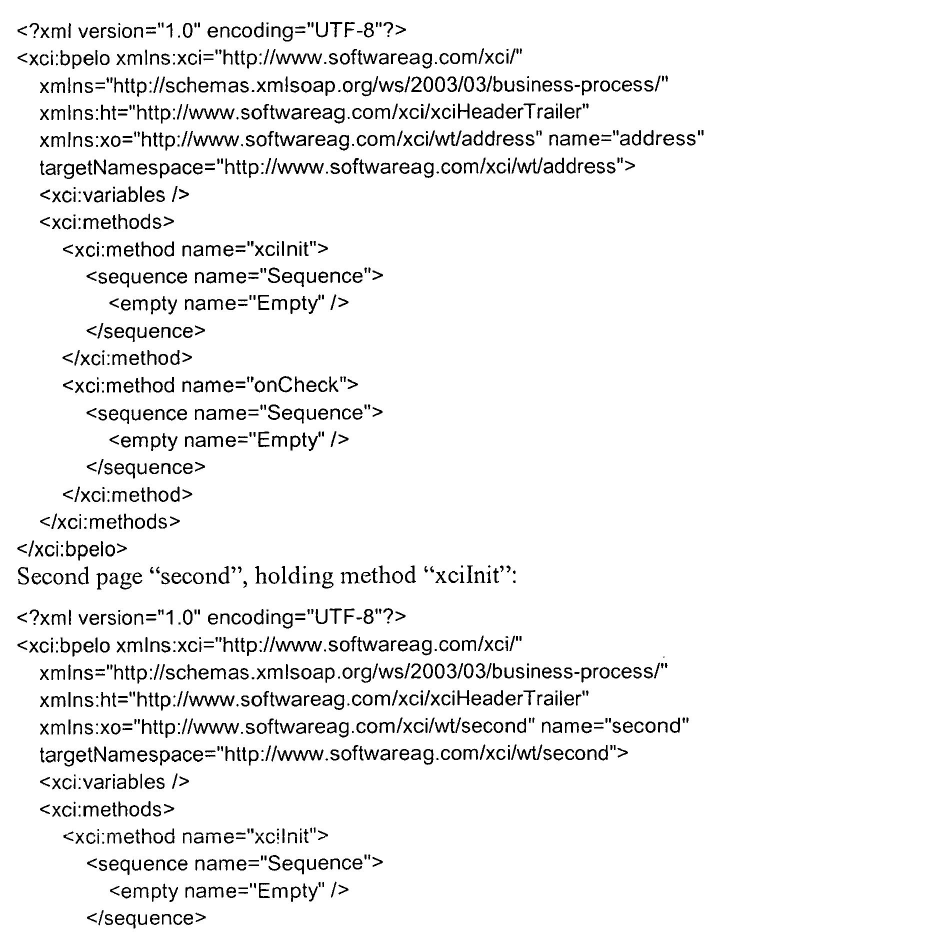

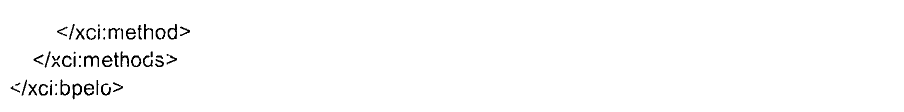

The BPEL code that is generated out of the pages is:

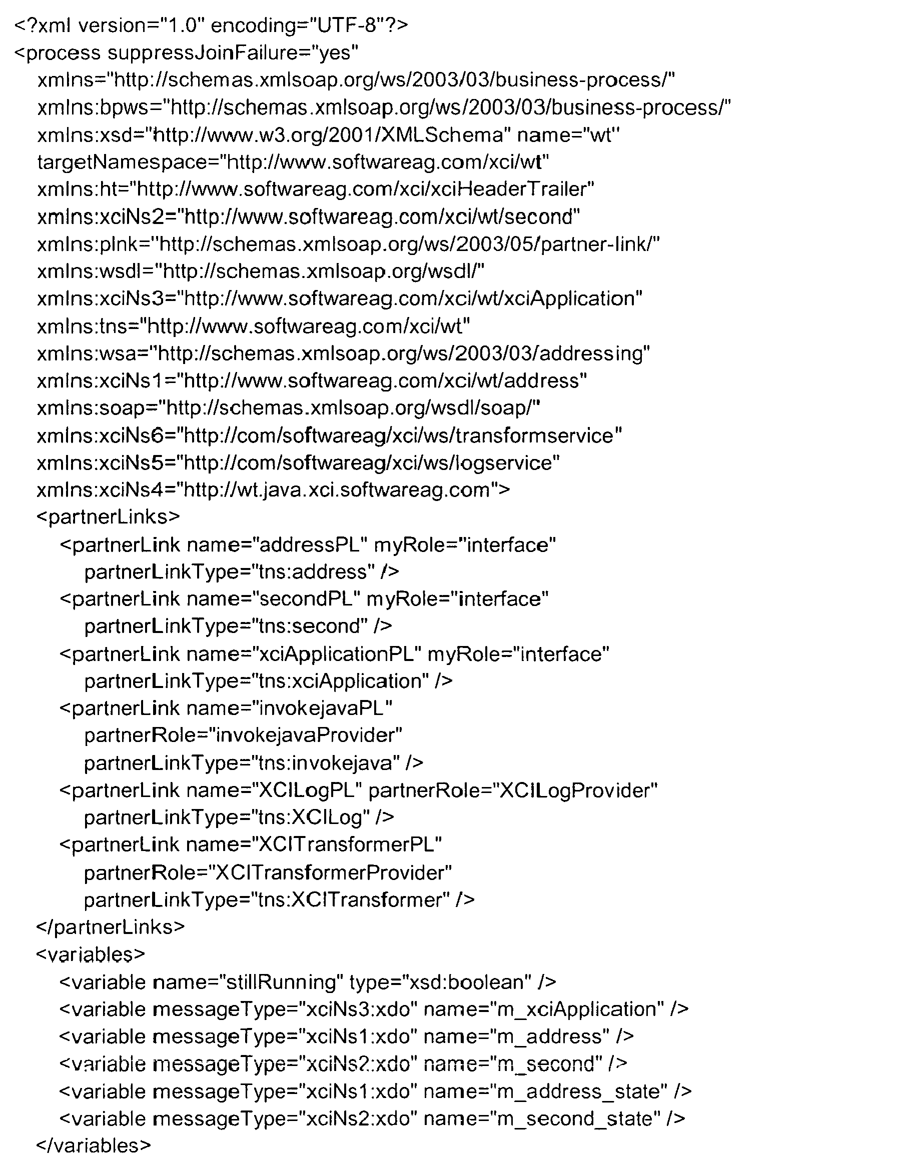

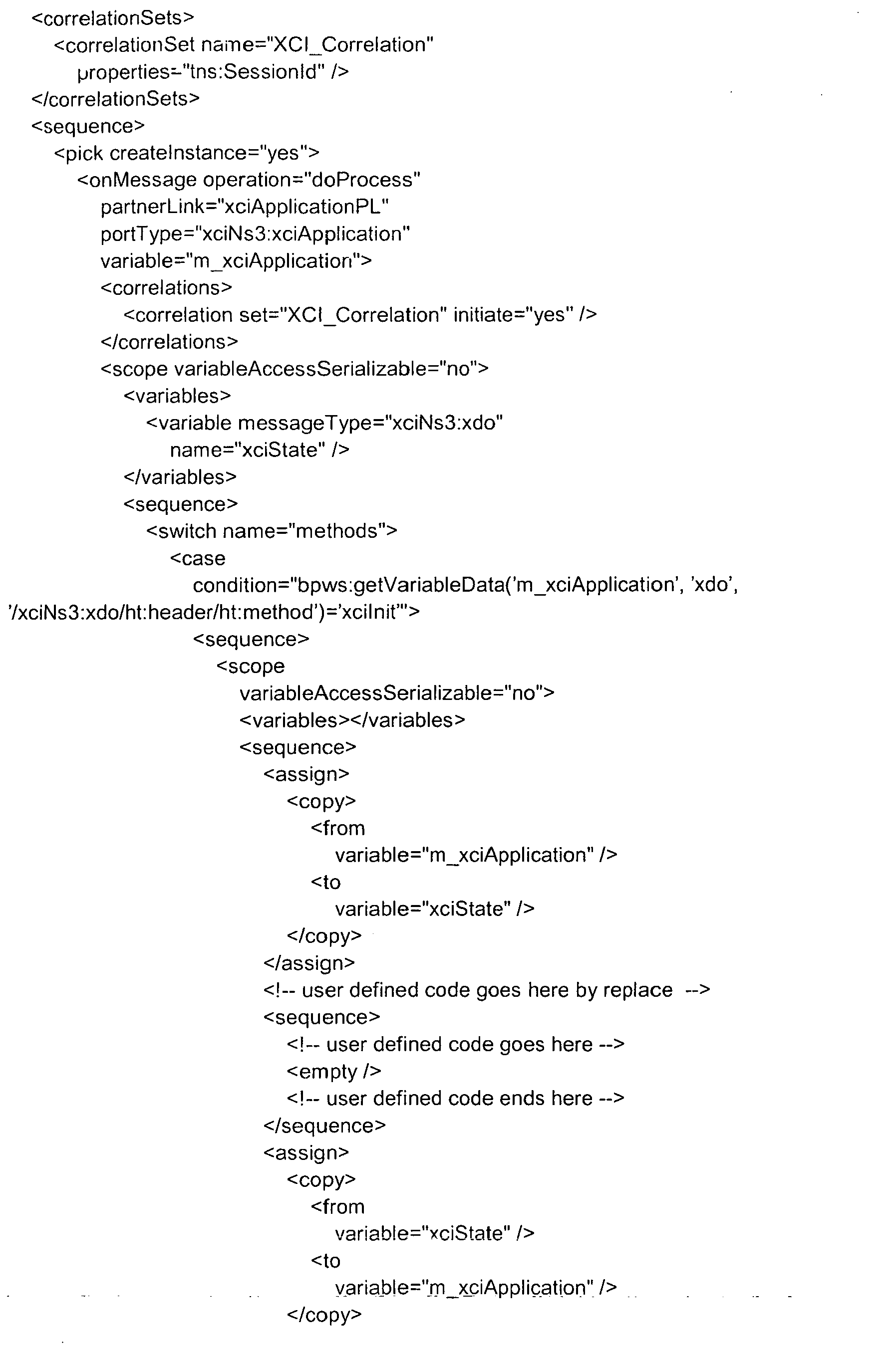

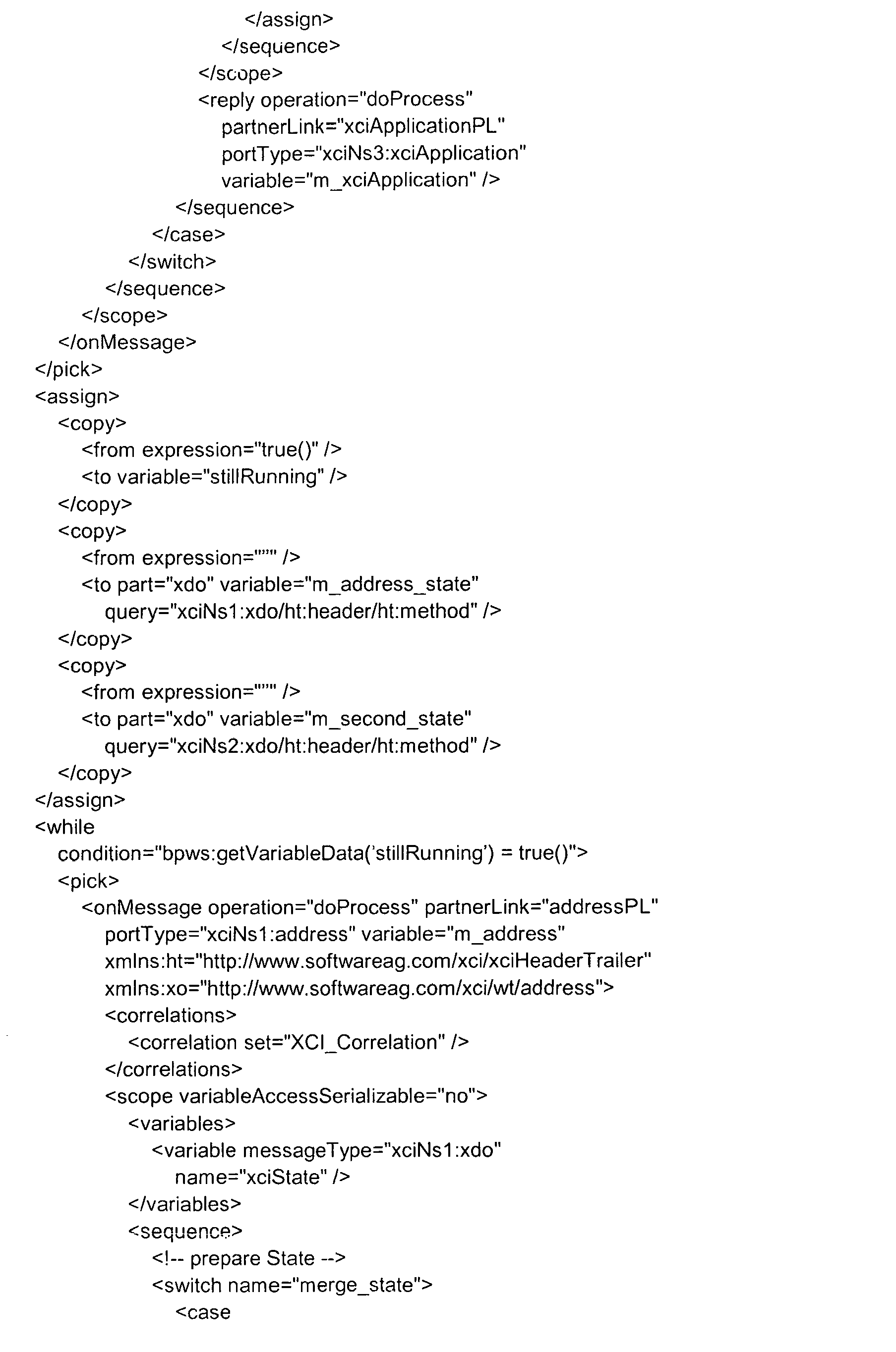

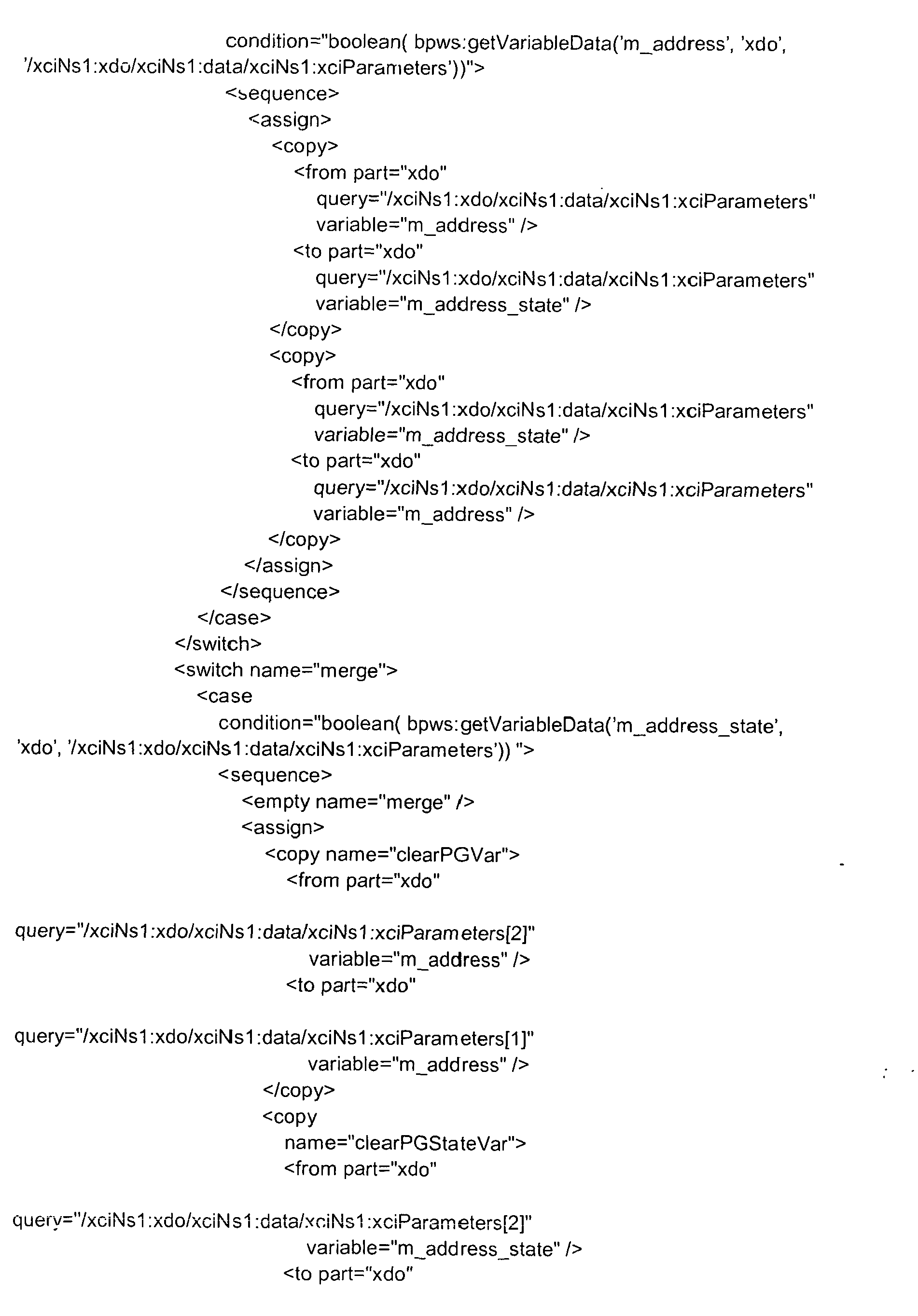

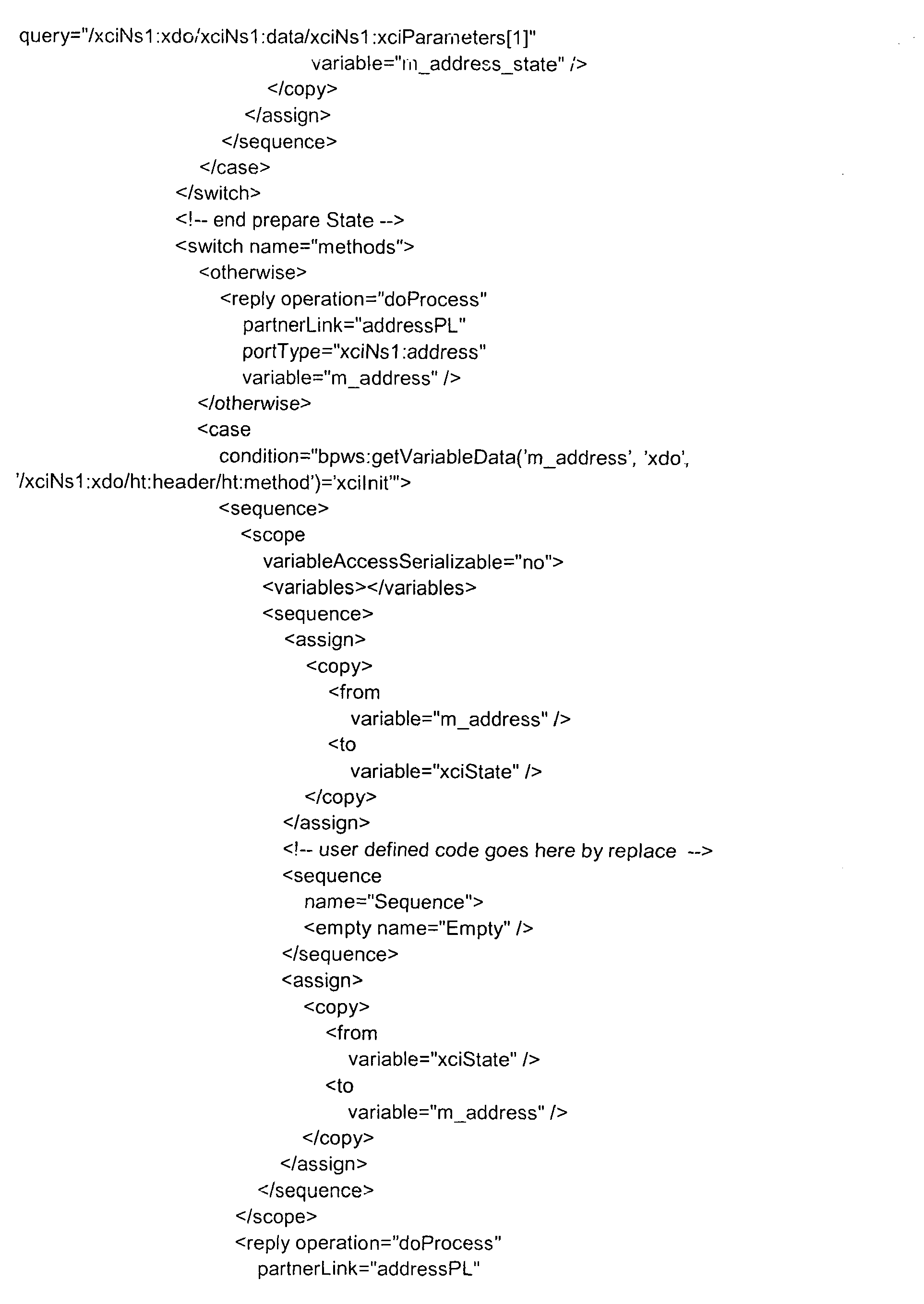

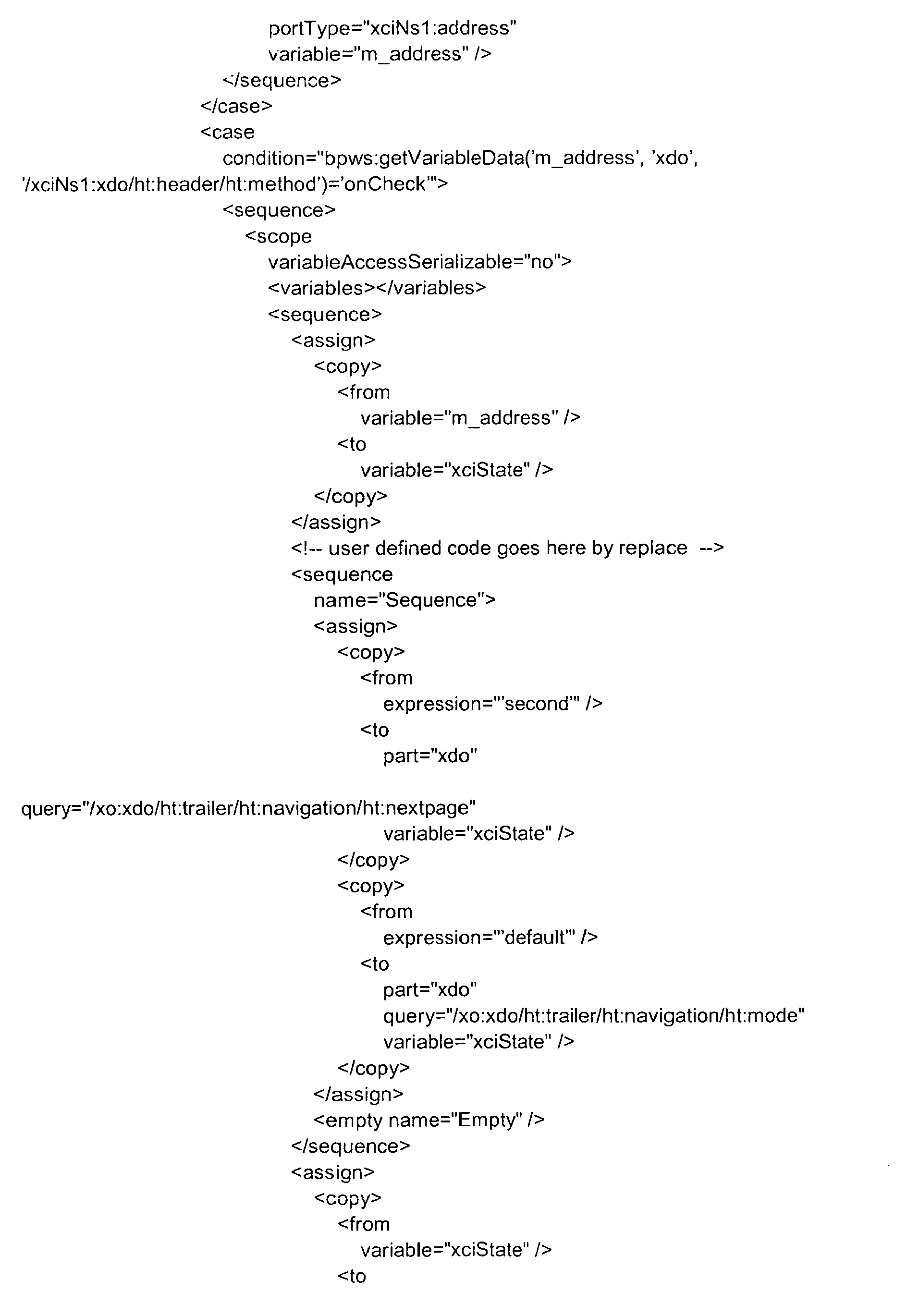

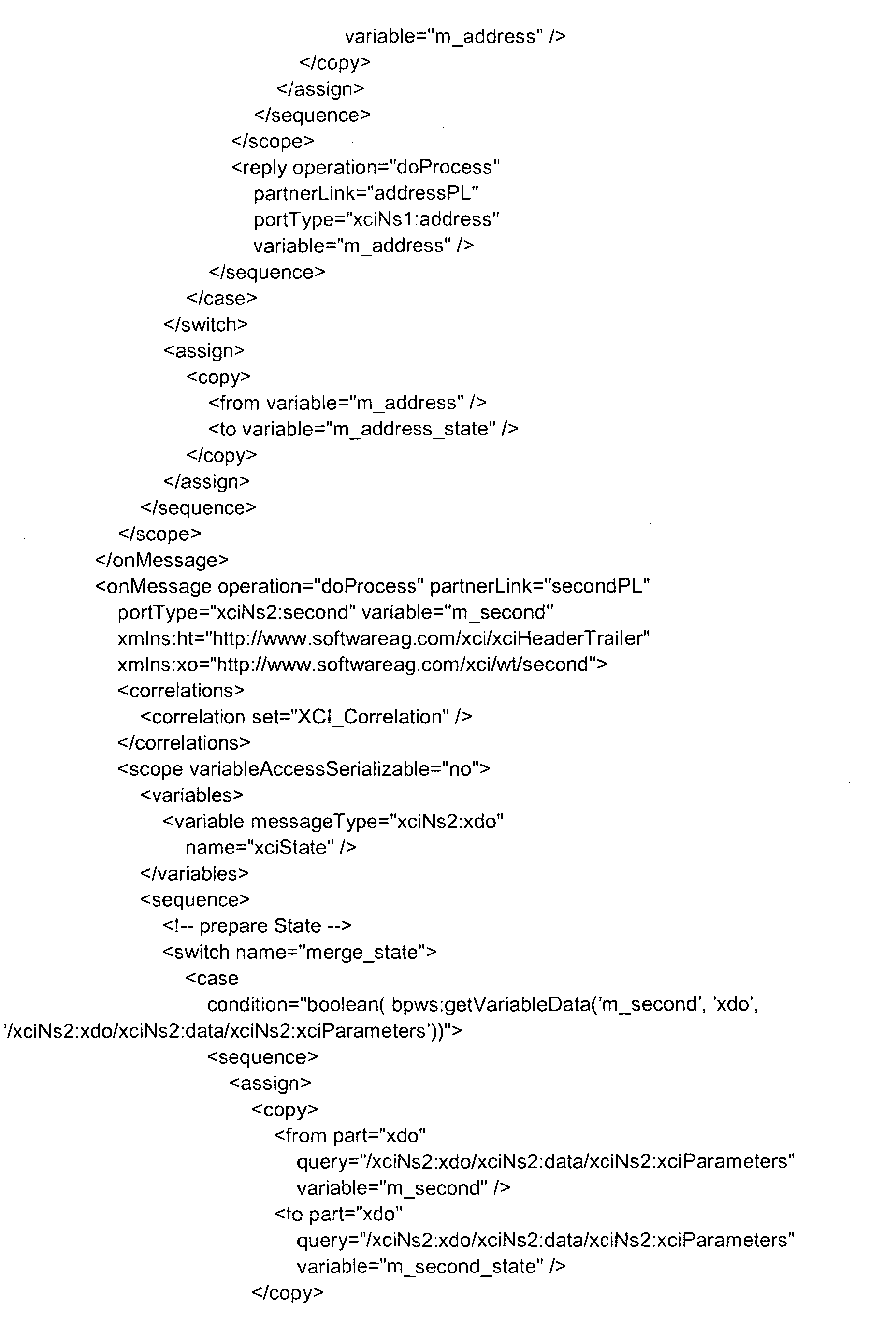

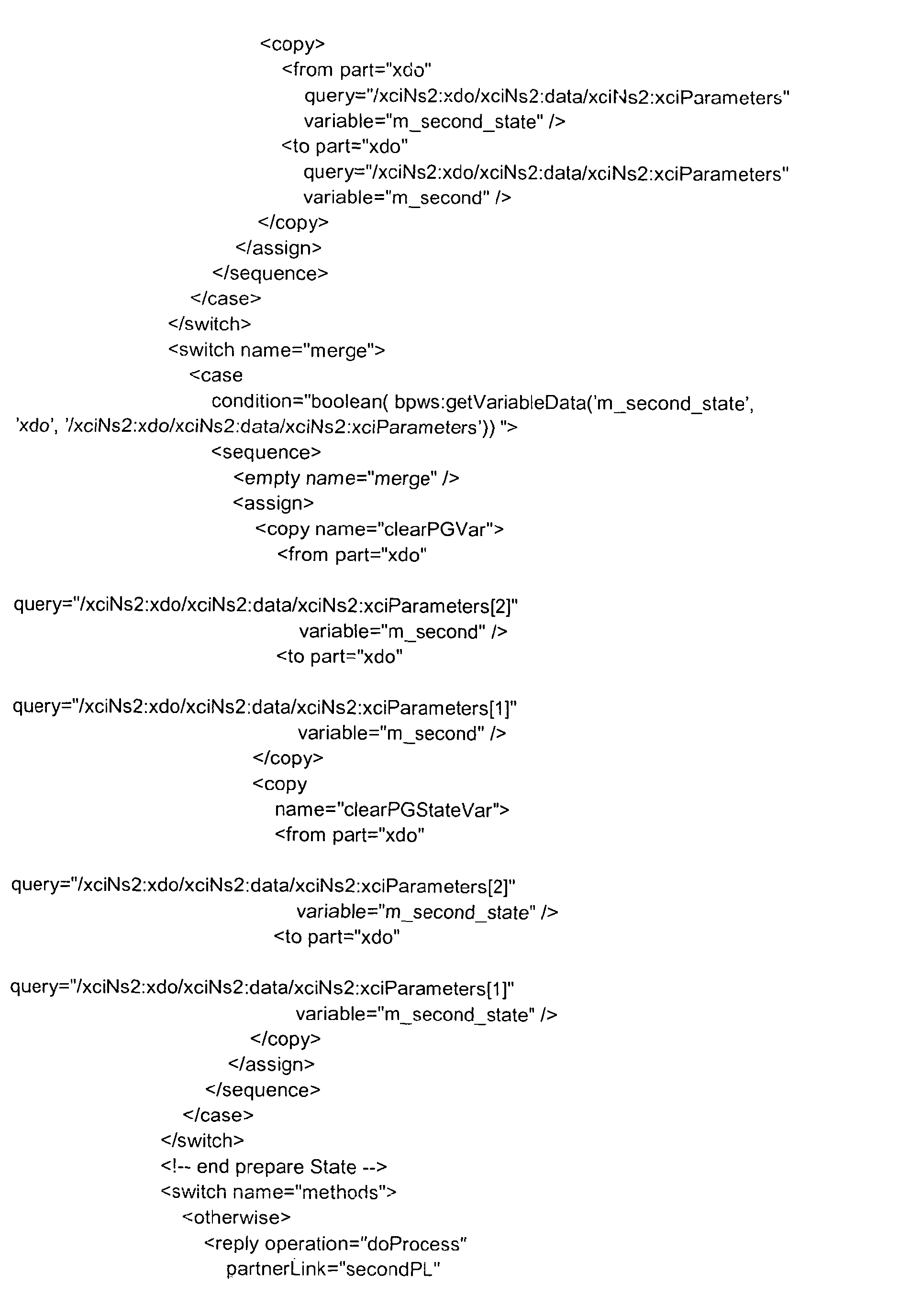

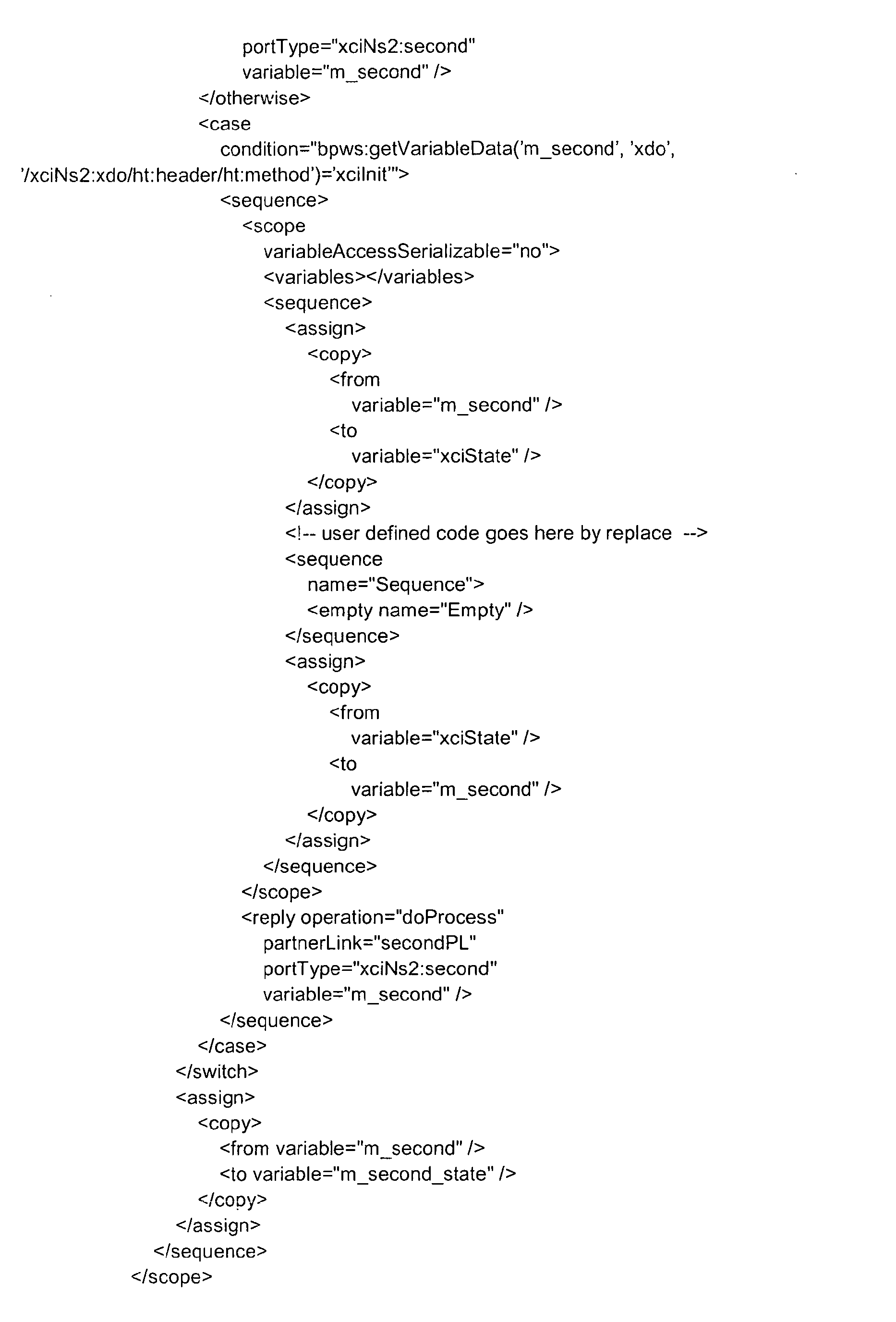

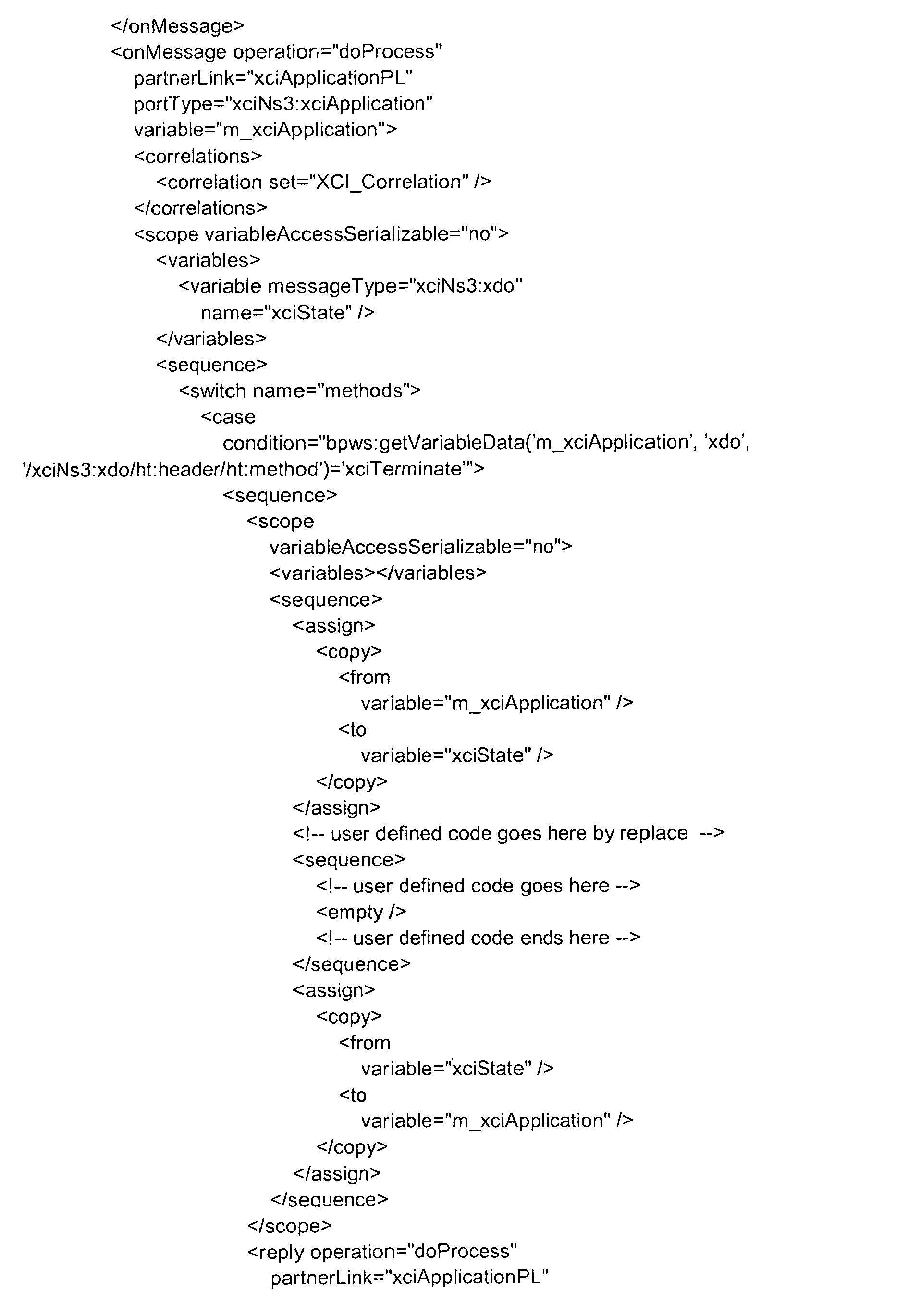

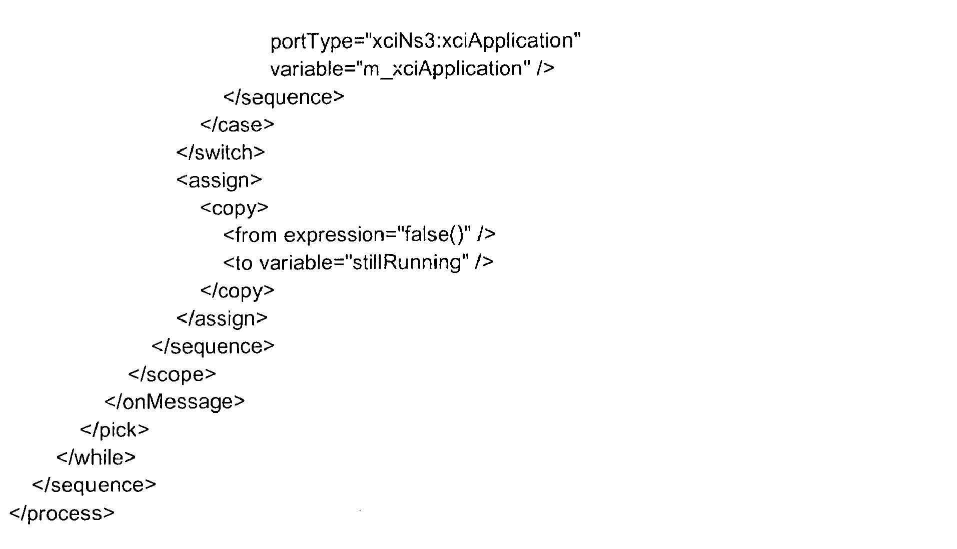

## Claims

1. Application framework for composing applications involving a plurality of webservices (30), comprising:
a. a layout editor adapted to create a graphical user interface of an application comprising a plurality of pages (10), each page (10) comprising at least one element (11) for interaction with a user to generate or modify a set of data (41);
b. a control layer editor, adapted to create for each page (10) of the graphical user interface a corresponding code fragment (50) receiving and processing the set of data relating to the respective page (10); and
c. a generator (100) generating an orchestration sequence (80) from the plurality of code fragments (50), wherein the processing of the orchestration sequence (80) by an engine (110) involves the invoking of the plurality of webservices (30).

2. Application framework according to claim 1, further adapted to create each code fragment (50) such that it receives the set of data (41) via a webservice interface.

3. Application framework according to claim 2, wherein the interface definition for the webservice interface comprises an XML schema definition (XSD) of the set of data (41) and at least one function called by the respective page, in particular a web service definition (WSDL, 42).

4. Application framework according to claim 3, further adapted to automatically derive the XSD and at least one WSDL for each page (10) created in the layout editor.

5. Application framework according to any of the preceding claims, wherein the control layer editor is adapted to create the code fragments (50) as fragments implemented in Business Process Execution Language (BPEL) and wherein the orchestration sequence (80) is a BPEL sequence, which can be processed by a BPEL engine (110).

6. Application framework according to any of the preceding claims, wherein each code fragment (50) comprises a plurality of method fragments (51), each method fragment (51) corresponding to a function call generated on the respective page (10) of the graphical user interface.

7. Application framework according claim 6, wherein an application composed with the application framework performs the following steps, when processing a request sent from a page (10) of the graphical user interface:
- selecting the appropriate code fragment (50);
- filling a state variable (41) with the set of data comprised in the request;
- selecting the appropriate method fragment (51) of the code fragment (50);
- executing the method fragment (51) the execution involving the invoking of at least one webservice (30);
- sending the updated state variable (41) back to the page (10) of the graphical user interface.

8. Application framework according to any of the preceding claims, wherein, processing the orchestration sequence (80) of an application composed with the application framework comprises holding the state of an object (41) and processing the state based on the operations defined in one or more code fragments (50).

9. Application framework according to claim 8, wherein processing the state comprises transforming the object into a format suitable for a webservice (30), executing the webservice (30) and transforming the response of the webservice (30) back into an initial format of the object.

10. Application framework according to claim 9, wherein the object comprises XML data (41) conforming to an XSD and wherein the transforming is performed using XSLT encapsulated as a webservice.

11. Method of composing applications involving a plurality of webservices (30) using an application framework according to any of the claims 1 - 10.

12. Application composed using an application framework of any of the claims 1 - 10.

13. Data carrier comprising an application framework of any of the claims 1 - 10.

## Amended claims

### Amended claims in accordance with Rule 86(2) EPC.

**1.** Application framework *computer program product* for composing applications, comprising:
a. a layout editor adapted to create a graphical user interface of an application comprising a plurality of pages (10), each page (10) comprising at least one element (11) for interaction with a user to generate or modify a set of data (41), ***characterized in that** the application framework computer program product further comprises:*
b. a control layer editor, adapted to create for each page (10) of the graphical user interface a corresponding code fragment (50) receiving and processing the set of data relating to the respective page (10) *via a web service interface*, *and*
c. a generator (100) generating an orchestration sequence (80) from the plurality of code fragments (50), wherein the processing of the orchestration sequence (80) by an engine (110) involves the invoking of a plurality of webservices (30).

**2.** Application framework according to claim 1, wherein the interface definition for the webservice interface comprises an XML schema definition (XSD) of the set of data (41) and at least one function called by the respective page, in particular a web service definition (WSDL, 42).

**3.** Application framework according to claim 2, further adapted to automatically derive the XSD and at least one WSDL for each page (10) created in the layout editor.

**4.** Application framework according to any of the preceding claims, wherein the control layer editor is adapted to create the code fragments (50) as fragments implemented in Business Process Execution Language (BPEL) and wherein the orchestration sequence (80) is a BPEL sequence, which can be processed by a BPEL engine (110).

**5.** Application framework according to any of the preceding claims, wherein each code fragment (50) comprises a plurality of method fragments (51), each method fragment (51) corresponding to a function call generated on the respective page (10) of the graphical user interface.

**6.** Application framework according claim 5, wherein an application composed with the application framework performs the following steps, when processing a request sent from a page (10) of the graphical user interface:
- selecting the appropriate code fragment (50);
- filling a state variable (41) with the set of data comprised in the request;
- selecting the appropriate method fragment (51) of the code fragment (50);
- executing the method fragment (51) the execution involving the invoking of at least one webservice (30);
- sending the updated state variable (41) back to the page (10) of the graphical user interface.

**7.** Application framework according to any of the preceding claims, wherein, processing the orchestration sequence (80) of an application composed with the application framework comprises holding the state of an object (41) and processing the state based on the operations defined in one or more code fragments (50).

**8.** Application framework according to claim 7, wherein processing the state comprises transforming the object into a format suitable for a webservice (30), executing the webservice (30) and transforming the response of the webservice (30) back into an initial format of the object.

**9.** Application framework according to claim 8, wherein the object comprises XML data (41) conforming to an XSD and wherein the transforming is performed using XSLT encapsulated as a webservice.

**10.** Method of composing applications involving a plurality of webservices (30) using an application framework according to any of the claims 1 - 9.

**11.** Data carrier comprising an application framework of any of the claims 1 - 9.
